# EUROPÄISCHE PATENTSCHRIFT

(11) **EP 2 583 812 B1**
(45) Veröffentlichungstag und Bekanntmachung des Hinweises auf die Patenterteilung: **20.05.2015**
(21) Anmeldenummer: 12188661.8
(22) Anmeldetag: 16.10.2012
(51) Int. Cl.: B29C 49/42, B29C 49/56, B29C 49/78, B29C 33/20, B29C 33/24

(54) **Verfahren zum Betrieb einer Blasformmaschine**
Method for operating a blow moulding machine
Procédé de fonctionnement d'une machine de formage par soufflage

(30) Priorität: 20.10.2011 DE 102011116477
(43) Veröffentlichungstag der Anmeldung: 24.04.2013
(73) Patentinhaber: Hesta Blasformtechnik GmbH&Co. KG, 73037 Göppingen (DE)
(72) Erfinder: Beck, Eberhard, 72622 Nürtingen (DE)
(74) Vertreter: Reule, Hanspeter

(56) Entgegenhaltungen:
- EP-A1- 0 485 843
- WO-A1-2006/134031
- WO-A2-2011/076417
- DE-A1- 10 152 050
- DE-A1-102004 024 126
- DE-T2- 69 110 247

## Beschreibung

Die Erfindung betrifft ein Verfahren zum Betrieb einer Blasformmaschine gemäß Oberbegriff des Anspruchs 1.

Aus der WO 2006/134 031 A1 ist eine Blasformmaschine bekannt, deren Blasform zwei linear gegeneinander bewegliche Blasformhälften aufweist, die zum Einführen eines Vorformlings und zum Entnehmen des aus dem Vorformling gefertigten Hohlkörpers auseinander gezogen und während des Fertigungs- bzw. Blasvorgangs unter Aufwendung einer Schließkraft aneinander anliegend gehalten werden. Die Schließkraft wird dabei über Pufferelemente in Form von Hydraulikzylindern aufgebracht. Desweiteren ist aus der WO 2011/076 417 A2, die den Oberbegriff des Anspruchs 1 offenbart, eine Antriebseinrichtung für eine Blasformmaschine bekannt, bei der eine der Blasformhälften gegen ein Pufferelement in Form eines doppelt wirkenden Linearzylinders abgestützt ist, während die andere Blasformhälfte mittels eines Kurbeltriebs auf sie zu und von ihr weg beweglich ist. Der Kurbeltrieb bringt die Schließkraft gegen die vom Pufferelement aufgebrachte Kraft auf. In beiden Fällen wird die Schließkraft somit durch die Gegenkraft der jeweiligen Hydraulikzylinder begrenzt.

Es ist daher Aufgabe der Erfindung, ein Verfahren der eingangs genannten Art derart weiterzuentwickeln, dass die Schließkraft erhöht werden kann.

Erfindungsgemäß wird die Aufgabe durch ein Verfahren mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, dass der doppelt wirkende Linearzylinder einerseits als Pufferelement beim Einstellen der Blasformmaschine verwendet werden kann, bei dem eine der Schließkraft entgegen wirkende Gegenkraft eher gering sein sollte, während beim eigentlichen Blasprozeß durch Absperren der Verbindung zwischen den beiden Druckräumen der Kolben aufgrund der geringen Kompressibilität der Hydraulikflüssigkeit im Zylinder nahezu unbeweglich angeordnet ist und bei einer Erhöhung der Schließkraft nicht ausweichen kann. Ist durch ein erstes Anfahren der zweiten Blasformhälfte gegen die erste Blasformhälfte unter Bewegung des Kolbens mittels Bewegung des Kurbeltriebs in die Zwischenstellung eine Voreinstellung erreicht, in der der Kurbeltrieb aus der Zwischenstellung heraus unter Aufbringung einer hohen Schließkraft weiter bewegt werden kann, so kann der eigentliche Herstellungs- bzw. Blasprozeß beginnen. Hierzu wird das Ventil geschlossen, die zweite Blasformhälfte wird von der ersten zurückgezogen, und ein Vorformling wird zwischen die Blasformhälften eingebracht. Sodann wird die zweite Blasformhälfte wieder bis zur Anlage an die erste Blasformhälfte vorgeschoben, und der Kurbeltrieb wird aus der Zwischenstellung noch ein Stück weiter in die Endstellung bewegt, wobei die Gegenkraft durch eine elastische Verformung des Spannrahmens aufgebracht wird. Die Voreinstellung ist vorteilhaft, da die Blasformhälften Toleranzen aufweisen können, die aus Fertigungsungenauigkeiten oder Umwelteinflüssen wie Temperaturschwankungen resultieren. Mit der Voreinstellung wird erreicht, dass unabhängig von diesen Toleranzen eine gewünschte Zwischenstellung des Kurbeltriebs eingestellt werden kann, von der ausgehend die Schließkraft aufgebracht wird.

Der Herstellungsprozeß, bei dem die zweite Blasformhälfte bei geschlossenem Ventil hin- und herbewegt wird, wird für jeden aus einem Vorformling herzustellenden Hohlkörper einmal wiederholt, wobei bevorzugt wird, dass die zweite Blasformhälfte linear in einer Bewegungsrichtung bewegt wird und dass die um eine Schwenkachse motorisch schwenkbare Kurbel des Kurbeltriebs mit ihrer Längsachse in der Zwischenstellung in einem Winkel von 10° bis 45°, vorzugsweise von 15° bis 20°, zur Bewegungsrichtung steht. In einer solchen Stellung, die den Ausgangspunkt für den späteren Kraftaufbau beim Schließvorgang des Herstellungsprozesses bildet, kann der Kurbeltrieb eine hohe Schließkraft aufbringen, ohne dass sein Antriebsmotor groß dimensioniert sein muss. Besonders bevorzugt wird, dass der Winkel zwischen der Längsachse des Kurbeltriebs und der Bewegungsrichtung der zweiten Blasformhälfte in der Zwischenstellung 18° beträgt. In der Endstellung steht die Kurbel mit ihrer Längsachse bevorzugt in einem Winkel von weniger als 5°, vorzugsweise weniger als 1°, zur Bewegungsrichtung. Idealerweise erstreckt sich ihre Längsachse ebenso wie die Längsachse der zwischen ihr und der zweiten Blasformhälfte zur Kraftübertragung angeordneten Schubstange in der Bewegungsrichtung, so dass die Endstellung des Kurbeltriebs durch den maximal möglichen Vorschub definiert ist.

Zweckmäßig wird der Druck der Hydraulikflüssigkeit im ersten Druckraum mittels eines Drucksensors gemessen. Der Druck der nahezu unkompressiblen Hydraulikflüssigkeit im ersten Druckraum steigt bei der Bewegung des Kurbeltriebs von der Zwischenstellung in die Endstellung und somit bei der Erhöhung der Schließkraft entgegen der elastischen Rückstellkraft des Spannrahmens an. Indem die Messwerte des Drucksensors gemäß einer bevorzugten Ausführungsform mit Referenzwerten verglichen und/oder aufgezeichnet oder gespeichert werden, können Fehlfunktionen der Blasformmaschine erkannt und abgestellt werden, um einen zuverlässigen Betrieb zu gewährleisten. Dabei kann der Betrieb der Blasformmaschine unterbrochen werden, wenn ein Messwert des Drucksensors über bzw. unter einer vorbestimmten Ober- bzw. Untergrenze liegt und/oder wenn der zeitliche Verlauf der Messwerte um ein vorbestimmtes Maß von den Referenzwerten abweicht. Eine solche Abweichung von den erwarteten Druckwerten ist regelmäßig ein Zeichen dafür, dass sich die Einstellung der Blasformmaschine im Betrieb geändert hat, so dass die bevorzugten Einstellungen nicht mehr gegeben sind. Beispielsweise kann nach einiger Betriebsdauer die Stellung des Kurbeltriebs, von der ausgehend die Schließkraft aufgebracht wird, von der vorteilhaften, voreingestellten Zwischenstellung abweichen. Um weiterhin eine zuverlässige Funktion zu gewährleisten oder gar Beschädigungen der Blasformmaschine zu vermeiden, kann diese dann neu eingestellt werden, und anschließend kann der Blasprozeß fortgesetzt werden.

Zweckmäßig öffnet ein eine Verbindungsleitung zwischen den Druckräumen absperrendes Sicherheitsventil selbsttätig, wenn der Druck im Druckraum eine weitere Obergrenze überschreitet. Diese Funktion dient als Sicherheit, um eine Überlastung des Hydrauliksystems zu vermeiden. Wird das Sicherheitsventil geöffnet, so findet ein Druckausgleich zwischen den beiden Druckräumen statt, und die erste Blasformhälfte kann beim weiteren Vorschieben der zweiten Blasformhälfte durch Bewegung des Kolbens im Zylinder ausweichen.

Im Folgenden wird die Erfindung anhand eines in der Zeichnung schematisch dargestellten Ausführungsbeispiels näher erläutert. Es zeigen
- Fig. 1: ein Schließsystem für die Blasform einer Extrusions-Blasformmaschine in schematisch vereinfachter Seitenansicht und
- Fig. 2: eine Schemazeichnung zur Erläuterung der Funktion des Linearzylinders.

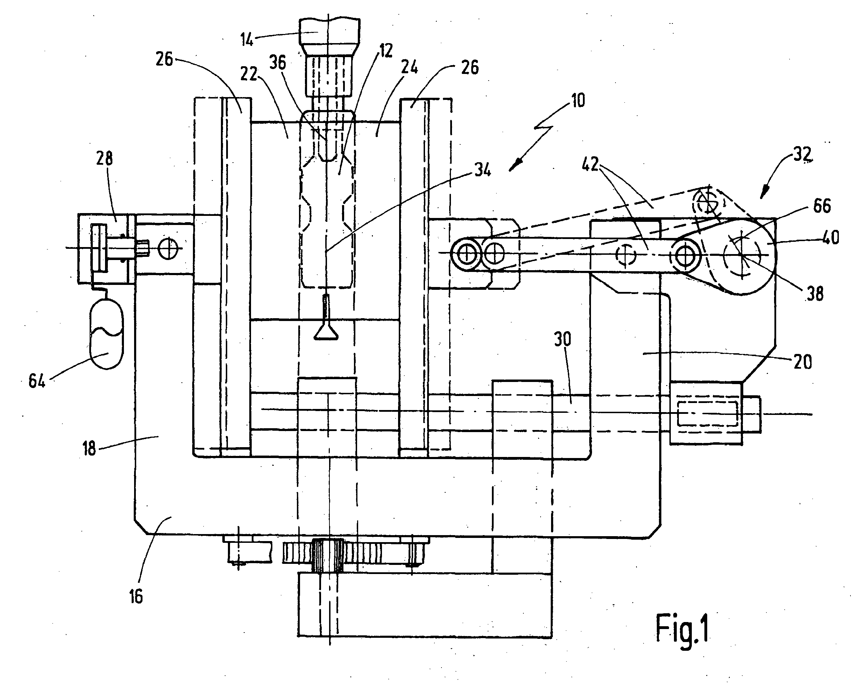

In Fig. 1 ist schematisch eine Blasformmaschine 10 dargestellt, die der Herstellung eines Kunststoffhohlkörpers, im vorliegenden Ausführungsbeispiel einer Kunststoffflasche 12, aus einem mittels eines Extruders 14 hergestellten schlauchförmigen Vorformling dient. Die Blasformmaschine 10 weist einen Spannrahmen 16 mit zwei nach oben stehenden Schenkeln 18, 20 auf sowie zwei Blasformhälften 22, 24, die jeweils an einer Spannplatte 26 montiert sind. Eine erste der Blasformhälften 22 ist über ihre Spannplatte 26 und über einen Linearzylinder 28 an einem ersten der Schenkel 18 des Spannrahmens 16 abgestützt, während die zweite Blasformhälfte 24 mit ihrer Spannplatte 26 auf Führungsschienen 30, von denen in Fig. 1 nur die vorderste gezeigt ist, linear beweglich geführt ist. Sie kann mittels eines am zweiten Schenkel 20 des Spannrahmens 16 abgestützten Kurbeltriebs 32 von der ersten Blasformhälfte 22 weggezogen und auf diese zu bewegt werden, bis sie entlang einer Trennfuge 34 an ihr anliegt und mit ihr eine Blasform bildet. Der in die Blasform eingebrachte Vorformling wird dann mittels eines Blasdorns 36 zur Kunststoffflasche 12 aufgeblasen.

Der Kurbeltrieb 32 weist eine um ein gegen den zweiten Schenkel 20 des Spannrahmens 16 abgestützte Schwenkachse 38 verschwenkbare Kurbel 40 sowie eine mit der Kurbel 40 und der die zweite Blasformhälfte 24 tragenden Spannplatte 26 jeweils gelenkig verbundene Schubstange 42 auf und dient dem Verschieben der zweiten Blasformhälfte 24 in einer in der Horizontalen verlaufenden Bewegungsrichtung. Für weitere Details der Blasformmaschine 10 wird auf die Offenbarung der WO 2011/076 417 A2, Fig. 1a, 1b mit zugehöriger Beschreibung, verwiesen .

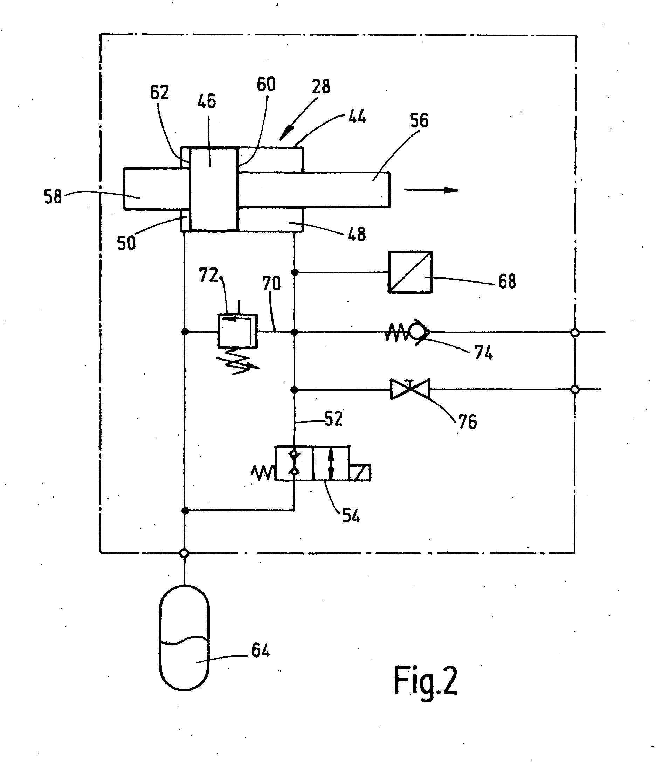

Wie insbesondere in Fig. 2 gezeigt, weist der Linearzylinder 28 ein Gehäuse 44 auf, das mit der die erste Blasformhälfte 22 tragenden Spannplatte 26 verbunden ist, sowie einen im Gehäuse 44 linear beweglichen Kolben 46, der mit dem ersten Schenkel 18 des Spannrahmens 16 verbunden ist. Durch den Kolben 46 sind ein erster Druckraum 48 und ein zweiter Druckraum 50 druckdicht gegeneinander abgegrenzt, welche mit einer Hydraulikleitung 52 miteinander verbunden sind. In der Hydraulikleitung 52 ist ein 2/2-Wegeventil 54 angeordnet, durch das die Hydraulikleitung 52 wahlweise freigegeben oder abgesperrt werden kann, so dass die Druckräume 48, 50 wahlweise miteinander kommunizierend oder gegeneinander absperrbar sind. Die Druckräume 48, 50 weisen jeweils denselben Durchmesser auf, werden aber von unterschiedlich dicken Kolbenstangen durchsetzt. Durch den ersten Druckraum 48 verläuft eine erste Kolbenstange 56, die dünner ausgeführt ist als eine durch den zweiten Druckraum 50 verlaufende zweite Kolbenstange 58. Somit ist eine eine einseitige bewegliche axiale Begrenzung des ersten Druckraums 48 bildende erste Ringfläche 60 des Kolbens 46 größer als eine ihr gegenüberliegende, eine einseitige bewegliche axiale Begrenzung des zweiten Druckraums 50 bildende zweite Ringfläche 62 des Kolbens 46. Beide Druckräume 48, 50 sind zudem mit einem Speicher 64 verbunden, in dem Hydraulikflüssigkeit unter einem Druck von mehr als 100 bar gehalten wird, so dass aufgrund der unterschiedlichen Größen der Ringflächen 60, 62 bei geöffnetem Ventil 54 der Kolben 46 in einer Endposition gehalten wird, in der er an der in Fig. 2 links dargestellten Wand des Gehäuses 44 anliegt.

Der Linearzylinder 28 dient bei einem ersten Einstellhub der Blasformmaschine 10 als Pufferelement. Für den Herstellungsprozeß ist es von Vorteil, wenn der Kurbeltrieb 32 stets weitestgehend dieselbe Position einnimmt, wenn die Blasformhälften 22, 24 aneinander in Anlage kommen, um ausgehend von dieser Position unter elastischer Verformung des Spannrahmens 16 einen hohen Schließdruck aufzubauen. Da die Blasformhälften 22, 24 aber Fertigungstoleranzen unterworfen sind und ihre Größe aufgrund von Umwelteinflüssen wie Temperaturschwankungen zudem variieren kann, ist eine Voreinstellung erforderlich, die der Linearzylinder 28 erleichtert. So wird in einem ersten Verfahrensschritt, bei dem das Ventil 54 geöffnet ist, die zweite Blasformhälfte 24 bis zur Anlage an die erste Blasformhälfte 22 auf diese zu bewegt, und der Kurbeltrieb 32 wird anschließend noch ein Stück weiter bewegt, bis er in eine Zwischenstellung gelangt, die in Fig. 1 gestrichelt dargestellt ist. In dieser Zwischenstellung schließt die Längsachse 66 der Kurbel 40 mit der der Bewegungsrichtung der zweiten Blasformhälfte 24 entsprechenden Horizontalen einen vorbestimmten Winkel ein, der in Fig. 1 schematisch als 45°-Winkel dargestellt ist, in der Praxis jedoch meist kleiner ist. So werden bei den meisten Anwendungsfällen Winkel von etwa 18° bevorzugt. Die weitere Bewegung des Kurbeltriebs 32 in die Zwischenstellung, nachdem die Blasformhälften 22, 24 bereits vor Erreichen der Zwischenstellung durch den Kurbeltrieb 32 aneinander in Anlage gekommen sind, erfolgt durch Bewegung des Kolbens 46 im Gehäuse 44. Dabei ist im vorliegenden Ausführungsbeispiel das Gehäuse 44 mit der die erste Blasformhälfte 22 tragenden Spannplatte 26 verbunden, während der Kolben 46 mit dem ersten Schenkel 18 des Spannrahmens 16 verbunden ist. Die Bewegung des Kurbeltriebs 32 in die Zwischenstellung erfolgt dann entgegen der durch den Druck der Hydraulikflüssigkeit bewirkten resultierenden Kraft auf den Kolben 46, und dieser wird im Gehäuse 44 ein Stück weit nach rechts bewegt, wobei Hydraulikflüssigkeit vom ersten Druckraum 48 in den zweiten Druckraum 50 verdrängt wird. Bei der Bewegung des Kolbens 46 handelt es sich um eine Relativbewegung gegenüber dem Gehäuse 44. In ortsfesten Koordinaten gemessen handelt es sich um eine Bewegung des Gehäuses 44 nach links bei feststehendem Kolben 46 (Fig. 2).

Ist die Zwischenstellung des Kurbeltriebs 32 erreicht, so wird das Ventil 54 geschlossen, so dass der Kolben 46 aufgrund der weitgehenden Inkompressibilität der Hydraulikflüssigkeit, in der Regel ein Hydrauliköl, nahezu unbeweglich im Gehäuse 44 angeordnet ist. Der Kurbeltrieb 32 wird dann unter Zurückziehung der zweiten Blasformhälfte 24 von der ersten Blasformhälfte 22 aus der Zwischenstellung zurück bewegt, wobei die Zwischenstellung eine Voreinstellung der Blasformmaschine 10 definiert, die der Kurbeltrieb 32 dann annimmt, wenn im weiteren Herstellungsprozeß die Blasformhälften 22, 24 aufeinander treffen.

Nach dem Zurückziehen der zweiten Blasformhälfte 24 von der ersten Blasformhälfte 22 beginnt der eigentliche Herstellungsprozeß. Der Vorformling wird zwischen die Blasformhälften 22, 24 eingebracht, und die Blasform wird wieder geschlossen, indem die zweite Blasformhälfte 24 auf die erste Blasformhälfte 22 zu bewegt wird. Die Bewegung des Kurbeltriebs 32 endet aber nicht in seiner Zwischenstellung, sondern er wird über diese hinaus weiter bewegt, wobei die Blasformhälften 22, 24 unter Aufbau einer Schließkraft und unter elastischer Verformung des Spannrahmens 16 aneinander angepresst werden. Die Bewegung des Kurbeltriebs 32 endet in einer mit durchgezogenen Linien in Fig. 1 gezeigten Endstellung, in der der Winkel zwischen der Längsachse 66 der Kurbel 40 und der Horizontalen 0° beträgt und somit die Kurbel 40 und die Schubstange 42 linear ausgerichtet sind. Die Endstellung ist somit die Stellung des weitesten Vorschubs der zweiten Blasformhälfte 24. Die Schenkel 18, 20 des Spannrahmens 16 werden um wenige Millimeter auseinander gebogen, woraus eine Schließkraft resultiert, die wesentlich größer ist als die Kraft, die zum Bewegen des Kolbens 46 beim Einstellhub aufgebracht wird, und in der Regel mindestens 10mal so groß ist. Um solche Kräfte auch mit einem Antriebsmotor für den Kurbeltrieb 32 realisieren zu können, der eine relativ niedrige Leistung hat, geht der oben beschriebene Einstellhub dem Herstellungsprozess voraus, bei dem die Längsachse 66 der Kurbel 40 in der Zwischenstellung in einem vorbestimmten, möglichst spitzen Winkel zur Horizontalen steht. Die Blasform verbleibt in der Endstellung, bis der Vorformling zur Kunststoffflasche 12 aufgeblasen worden ist. Dieser wird nach Rückzug der zweiten Blasformhälfte 24 aus der Blasform entnommen, ein neuer Vorformling wird zwischen die Blasformhälften 22, 24 eingebracht, und der Herstellungsvorgang wiederholt sich.

Die Blasformmaschine 10 verfügt über einige Überwachungsfunktionen, die es erlauben, den Herstellungsprozeß zu überwachen. So misst ein Drucksensor 68 den Druck im ersten Druckraum 48, der beim Aufbau der Schließkraft stets ansteigt. Die Messwerte des Drucksensors 68 werden mit gespeicherten oder beim vorherigen Herstellungsprozeß gemessenen Referenzwerten verglichen, wobei eine zu große Abweichung der gemessenen Druckwerte von den Referenzwerten darauf hindeutet, dass die Blasformmaschine neu eingestellt werden muß. Um den Druck im Druckraum 48 nicht zu groß werden zu lassen, ist zudem eine Verbindungsleitung 70 vorgesehen, in der ein bei einem vorbestimmten kritischen Druck automatisch öffnendes Sicherheitsventil 72 angeordnet ist, bei dessen Öffnen die Druckräume 48, 50 mittels der Verbindungsleitung 70 auch bei geschlossenem Ventil 54 miteinander verbunden sind. Über ein Füllventil 74 kann Hydraulikflüssigkeit nachgefüllt werden, über ein Absperrventil 76 kann Hydraulikflüssigkeit abgelassen werden.

In der vorliegenden Beschreibung ist stets die Rede davon, dass die zweite Blasformhälfte 24 bezüglich der ersten Blasformhälfte 22 bewegt wird. Es versteht sich von selbst, dass hiermit auch eine Relativbewegung gemeint sein kann, bei der beide Blasformhälften 22, 24 aufeinander zu oder voneinander weg bewegt werden.

Zusammenfassend ist folgendes festzuhalten:
Die Erfindung betrifft ein Verfahren zum Betrieb einer zwei Blasformhälften 22, 24 zur Herstellung eines Hohlkörpers 12 aus einem Vorformling aufweisenden Blasformmaschine 10, wobei eine erste der Blasformhälften 22 gegen einen Spannrahmen 16 abgestützt ist und eine zweite der Blasformhälften 24 mittels eines mit dem Spannrahmen 16 verbundenen Kurbeltriebs 32 gegenüber der ersten Blasformhälfte 22 beweglich ist, wobei die erste Blasformhälfte 22 und der Spannrahmen 16 mittels eines doppelt wirkenden, hydraulischen Linearzylinders 28 verbunden sind, dessen Kolben 46 und Gehäuse 44 schub- und zugfest mit jeweils einem der beiden Elemente 16, 22 verbunden sind, wobei mittels des Kolbens 46 zwei mit druckbeaufschlagter Hydraulikflüssigkeit gefüllte Druckräume 48, 50 druckdicht gegeneinander abgegrenzt sind, die von Kolbenstangen 56, 58 unterschiedlichen Durchmessers durchsetzt sind, so dass eine einen ersten der Druckräume 48 axial beweglich begrenzende Ringfläche 60 des Kolbens 46 größer ist als die den zweiten Druckraum 50 axial begrenzende Ringfläche 62, und wobei die Druckräume 48, 50 mittels eines Ventils 54 wahlweise miteinander kommunizierend oder gegeneinander absperrbar sind. Erfindungsgemäß ist vorgesehen, dass in einem ersten Verfahrensschritt bei geöffnetem Ventil 54 die zweite Blasformhälfte 24 bis zur Anlage an die erste Blasformhälfte 22 auf diese zu bewegt wird und der Kurbeltrieb 32 anschließend unter Bewegung des Kolbens 46 gegen eine in Richtung vom ersten zum zweiten Druckraum 48, 50 wirkende, durch den Druck der Hydraulikflüssigkeit bewirkte Kraft bis zu einer vorbestimmten Zwischenstellung bewegt wird, dass anschließend das Ventil 54 geschlossen wird, dass nach Schließen des Ventils 54 die zweite Blasformhälfte 24 von der ersten Blasformhälfte 22 zurückgezogen wird und dass in einem zweiten Verfahrensschritt ein Vorförmling zwischen die Blasformhälften 22, 24 eingebracht und die zweite Blasformhälfte 24 bis zur Anlage an die erste Blasformhälfte 22 auf diese zu bewegt wird und der Kurbeltrieb 32 unter elastischer Verformung des Spannrahmens 16 über die Zwischenstellung hinaus unter Aufbringung einer Schließkraft in eine Endstellung bewegt wird.

## Patentansprüche

1. Verfahren zum Betrieb einer zwei Blasformhälften (22, 24) zur Herstellung eines Hohlkörpers (12) aus einem Vorformling aufweisenden Blasformmaschine (10), wobei eine erste der Blasformhälften (22) gegen einen Spannrahmen (16) abgestützt ist und eine zweite der Blasformhälften (24) mittels eines mit dem Spannrahmen (16) verbundenen Kurbeltriebs (32) gegenüber der ersten Blasformhälfte (22) beweglich ist, wobei die erste Blasformhälfte (22) und der Spannrahmen (16) mittels eines doppelt wirkenden, hydraulischen Linearzylinders (28) verbunden sind, dessen Kolben (46) und Gehäuse (44) schub- und zugfest mit jeweils einem der beiden Elemente (16, 22) verbunden sind, wobei mittels des Kolbens (46) zwei mit druckbeaufschlagter Hydraulikflüssigkeit gefüllte Druckräume (48, 50) druckdicht gegeneinander abgegrenzt sind, die von Kolbenstangen (56, 58) unterschiedlichen Durchmessers durchsetzt sind, so dass eine einen ersten der Druckräume (48) axial beweglich begrenzende Ringfläche (60) des Kolbens (46) größer ist als die den zweiten Druckraum (50) axial begrenzende Ringfläche (62), und wobei die Druckräume (48, 50) mittels eines Ventils (54) wahlweise miteinander kommunizierend oder gegeneinander absperrbar sind, **dadurch gekennzeichnet, dass** in einem ersten Verfahrensschritt bei geöffnetem Ventil (54) die zweite Blasformhälfte (24) bis zur Anlage an die erste Blasformhälfte (22) auf diese zu bewegt wird und der Kurbeltrieb (32) anschließend unter Bewegung des Kolbens (46) gegen eine in Richtung vom ersten zum zweiten Druckraum (48, 50) wirkende, durch den Druck der Hydraulikflüssigkeit bewirkte Kraft bis zu einer vorbestimmten Zwischenstellung bewegt wird, dass anschließend das Ventil (54) geschlossen wird, dass nach Schließen des Ventils (54) die zweite Blasformhälfte (24) von der ersten Blasformhälfte (22) zurückgezogen wird und dass in einem zweiten Verfahrensschritt ein Vorformling zwischen die Blasformhälften (22, 24) eingebracht und die zweite Blasformhälfte (24) bis zur Anlage an die erste Blasformhälfte (22) auf diese zu bewegt wird und der Kurbeltrieb (32) unter elastischer Verformung des Spannrahmens (16) über die Zwischenstellung hinaus unter Aufbringung einer Schließkraft in eine Endstellung bewegt wird.

2. Verfahren nach Anspruch 1, **dadurch gekennzeichnet, dass** in einem dritten Verfahrensschritt nach dem Aufblasen des Vorformlings zu einem Hohlkörper (12) die zweite Blasformhälfte (24) von der ersten Blasformhälfte (22) zurückgezogen wird, dass der Hohlkörper (12) aus der Blasform entnommen wird, dass ein weiterer Vorformling zwischen die Blasformhälften (22, 24) eingebracht wird und dass die zweite Blasformhälfte (24) bis zur Anlage an die erste Blasformhälfte (22) auf diese zu bewegt und der Kurbeltrieb (32) unter Aufbringung der Schließkraft in die Endstellung bewegt wird.

3. Verfahren nach Anspruch 2, **dadurch gekennzeichnet, dass** der dritte Verfahrensschritt zur Herstellung einer Vielzahl von Hohlkörpern (12) mehrfach wiederholt wird.

4. Verfahren nach einem der vorangehenden Ansprüche, **dadurch gekennzeichnet, dass** die zweite Blasformhälfte (24) linear in einer Bewegungsrichtung bewegt wird und dass die um eine Schwenkachse (38) motorisch schwenkbare Kurbel (40) des Kurbeltriebs (32) mit ihrer Längsachse (66) in der Zwischenstellung in einem Winkel von 10° bis 45°, vorzugsweise von 15° bis 20°, zur Bewegungsrichtung steht.

5. Verfahren nach Anspruch 4, **dadurch gekennzeichnet, dass** die Kurbel (40) in der Endstellung mit ihrer Längsachse (66) in einem Winkel von weniger als 5°, vorzugsweise weniger als 1°, zur Bewegungsrichtung steht.

6. Verfahren nach einem der vorangehenden Ansprüche, **dadurch gekennzeichnet, dass** der Druck der Hydraulikflüssigkeit im ersten Druckraum (48) mittels eines Drucksensors (68) gemessen wird.

7. Verfahren nach Anspruch 6, **dadurch gekennzeichnet, dass** die Meßwerte des Drucksensors (68) mit Referenzwerten verglichen und/oder aufgezeichnet oder gespeichert werden.

8. Verfahren nach einem der Ansprüche 6 oder 7, **dadurch gekennzeichnet, dass** der Betrieb der Blasformmaschine (10) unterbrochen wird, wenn ein Messwert des Drucksensors (68) über bzw. unter einer vorbestimmten Ober- bzw. Untergrenze liegt und/oder wenn der zeitliche Verlauf der Messwerte um ein vorbestimmtes Maß von den Referenzwerten abweicht.

9. Verfahren nach einem der vorangehenden Ansprüche, **dadurch gekennzeichnet, dass** ein eine Verbindungsleitung (70) zwischen den Druckräumen (48, 50) absperrendes Sicherheitsventil (72) selbsttätig öffnet, wenn der Druck im ersten Druckraum (48) eine weitere Obergrenze überschreitet.

## Claims

1. Method for operating a blow mould machine (10) which has two blow mould halves (22, 24) in order to produce a hollow member (12) from a preform, a first of the blow mould halves (22) being supported against a clamping frame (16) and a second of the blow mould halves (24) being able to be moved with respect to the first blow mould half (22) by means of a crank drive (32) which is connected to the clamping frame (16), the first blow mould half (22) and the clamping frame (16) being connected by means of a dual-action hydraulic linear cylinder (28) whose piston (46) and housing (44) are connected to one of the two elements (16, 22) so as to be resistant to being pushed and pulled, respectively, there being delimited with respect to each other in a pressure-tight manner by means of the piston (46) two pressure chambers (48, 50) which are filled with pressurised hydraulic fluid and through which piston rods (56, 58) of different diameters extend so that an annular face (60) of the piston (46), which face delimits a first of the pressure chambers (48) in an axially movable manner, is larger than the annular face (62) which axially delimits the second pressure chamber (50), and the pressure chambers (48, 50) being able to selectively communicate with each other or be blocked with respect to each other by means of a valve (54), **characterised in that**, in a first method step with an open valve (54), the second blow mould half (24) is moved towards the first blow mould half (22) until it is in abutment therewith and the crank drive (32) is subsequently moved, with the piston (46) being moved counter to a force which acts in the direction from the first to the second pressure chamber (48, 50) and which is brought about by the pressure of the hydraulic fluid, as far as a predetermined intermediate position, **in that** the valve (54) is subsequently closed, **in that**, after the valve (54) is closed, the second blow mould half (24) is withdrawn from the first blow mould half (22) and **in that**, in a second method step, a preform is introduced between the blow mould halves (22, 24) and the second blow mould half (24) is moved towards the first blow mould half (22) until it is in abutment therewith and the crank drive (32) is moved into an end position with resilient deformation of the clamping frame (16) beyond the intermediate position with a closure force being applied.

2. Method according to claim 1, **characterised in that**, in a third method step, after the preform has been inflated to form a hollow member (12), the second blow mould half (24) is withdrawn from the first blow mould half (22), **in that** the hollow member (12) is removed from the blow mould, **in that** another preform is introduced between the blow mould halves (22, 24) and **in that** the second blow mould half (24) is moved towards the first blow mould half (22) until it is in abutment therewith and the crank drive (32) is moved into the end position with the closure force being applied.

3. Method according to claim 2, **characterised in that** the third method step is repeated several times in order to produce a large number of hollow members (12).

4. Method according to any one of the preceding claims, **characterised in that** the second blow mould half (24) is moved in a linear manner in a movement direction and **in that** the crank (40) of the crank drive (32), which crank can be pivoted in a motorised manner about a pivot axis (38), is located with the longitudinal axis (66) thereof in the intermediate position at an angle of from 10° to 45°, preferably from 15° to 20°, with respect to the movement direction.

5. Method according to claim 4, **characterised in that** the crank (40) is located in the end position with the longitudinal axis (66) thereof at an angle of less than 5°, preferably less than 1°, with respect to the movement direction.

6. Method according to any one of the preceding claims, **characterised in that** the pressure of the hydraulic fluid in the first pressure chamber (48) is measured by means of a pressure sensor (68).

7. Method according to claim 6, **characterised in that** the measurement values of the pressure sensor (68) are compared with reference values and/or recorded or stored.

8. Method according to either claim 6 or claim 7, **characterised in that** the operation of the blow mould machine (10) is interrupted when a measurement value of the pressure sensor (68) is above or below a predetermined upper or lower limit and/or when the time path of the measurement values deviates from the reference values by a predetermined degree.

9. Method according to any one of the preceding claims, **characterised in that** a safety valve (72) which blocks a connection line (70) between the pressure chambers (48, 50) opens independently when the pressure in the first pressure chamber (48) exceeds another upper limit.

## Revendications

1. Procédé d'exploitation d'une machine (10) de moulage par soufflage présentant deux moitiés (22, 24) de moule de soufflage afin de fabriquer un corps creux (12) à partir d'une paraison, sachant qu'une première (22) des moitiés de moule de soufflage est soutenue contre un cadre de serrage (16) et qu'une deuxième (24) des moitiés de moule de soufflage est mobile par rapport à la première moitié (22) de moule de soufflage au moyen d'un mécanisme d'embiellage (32) relié au cadre de serrage (16), sachant que la première moitié (22) de moule de soufflage et le cadre de serrage (16) sont reliés au moyen d'un vérin hydraulique linéaire (28) à double action, dont le piston (46) et le boîtier (44) sont respectivement reliés à un des deux éléments (16, 22) en solidarité de poussée et de traction, sachant que le piston (46) délimite l'une par rapport à l'autre en étanchéité à la pression deux chambres de pression (48, 50) remplies de liquide hydraulique sollicité en pression, chambres qui sont traversées par des tiges de piston (56, 58) de diamètres différents, de sorte qu'une surface annulaire (60) du piston (46) délimitant en mobilité axiale une première (48) des chambres de pression est plus grande que la surface annulaire (62) délimitant axialement la deuxième chambre de pression (50), et sachant que les chambres de pression (48, 50) peuvent, au moyen d'une soupape (54), être au choix mises en communication mutuelle ou isolées l'une de l'autre, **caractérisé en ce que**, dans une première étape du procédé, la soupape (54) étant ouverte, la deuxième moitié (24) de moule de soufflage est déplacée en direction de la première moitié (22) de moule de soufflage jusqu'à venir s'appliquer contre celle-ci et le mécanisme d'embiellage (32) est ensuite, par le déplacement du piston (46), déplacé jusqu'à une position intermédiaire prédéfinie à l'encontre d'une force produite par la pression du liquide hydraulique et agissant dans une direction allant de la première vers la deuxième chambre de pression (48, 50), **en ce que** la soupape (54) est ensuite fermée, **en ce qu'**à la suite de la fermeture de la soupape (54), la deuxième moitié (24) de moule de soufflage est ramenée par traction à l'écart de la première moitié (22) de moule de soufflage, et **en ce que**, dans une deuxième étape du procédé, une paraison est introduite entre les moitiés (22, 24) de moule de soufflage et la deuxième moitié (24) de moule de soufflage est déplacée en direction de la première moitié (22) de moule de soufflage jusqu'à venir s'appliquer contre celle-ci, et le mécanisme d'embiellage (32) est, avec déformation élastique du cadre de serrage (16), déplacé au-delà de la position intermédiaire dans une position finale en exerçant une force de fermeture.

2. Procédé selon la revendication 1, **caractérisé en ce que**, dans une troisième étape du procédé, à la suite du soufflage de la paraison en un corps creux (12), la deuxième moitié (24) de moule de soufflage est ramenée par traction à l'écart de la première moitié (22) de moule de soufflage, **en ce que** le corps creux (12) est sorti du moule de soufflage, **en ce qu'**une autre paraison est introduite entre les moitiés (22, 24) de moule de soufflage, et **en ce que** la deuxième moitié (24) de moule de soufflage est déplacée en direction de la première moitié (22) de moule de soufflage jusqu'à venir s'appliquer contre celle-ci, et le mécanisme d'embiellage (32) est déplacé dans la position finale en exerçant une force de fermeture.

3. Procédé selon la revendication 2, **caractérisé en ce que** la troisième étape du procédé est répétée de multiples fois pour fabriquer une multiplicité de corps creux (12).

4. Procédé selon l'une des revendications précédentes, **caractérisé en ce que** la deuxième moitié (24) de moule de soufflage est déplacée linéairement dans une direction de déplacement et **en ce que**, dans la position intermédiaire, l'axe longitudinal (66) de la manivelle (40) du mécanisme d'embiellage (32), laquelle peut pivoter de manière motorisée autour d'un axe de pivotement (38), se trouve sous un angle de 10° à 45°, de préférence de 15° à 20°, par rapport à la direction de déplacement.

5. Procédé selon la revendication 4, **caractérisé en ce que**, dans la position finale, l'axe longitudinal (66) de la manivelle (40) se trouve sous un angle inférieur à 5°, de préférence inférieur à 1 °, par rapport à la direction de déplacement.

6. Procédé selon l'une des revendications précédentes, **caractérisé en ce que** la pression du liquide hydraulique dans la première chambre de pression (48) est mesurée au moyen d'un capteur de pression (68).

7. Procédé selon la revendication 6, **caractérisé en ce que** les valeurs mesurées par le capteur de pression (68) sont comparées à des valeurs de référence et/ou sont tracées ou enregistrées.

8. Procédé selon la revendication 6 ou 7, **caractérisé en ce que** l'exploitation de la machine (10) de moulage par soufflage est interrompue si une valeur mesurée par le capteur de pression (68) est supérieure à une limite supérieure prédéfinie ou inférieure à une limite inférieure prédéfinie, et/ou si l'allure dans le temps des valeurs mesurées s'écarte des valeurs de référence dans une mesure prédéfinie.

9. Procédé selon l'une des revendications précédentes, **caractérisé en ce qu'**une soupape de sécurité (72), qui ferme une conduite de liaison (70) entre les chambres de pression (48, 50), s'ouvre automatiquement si la pression dans la première chambre de pression (48) dépasse une autre limite supérieure.
